Europäisches Patentamt

European Patent Office

Office européen des brevets

(19)

(11) Publication number: **0 068 573**
**B1**

(12)

# EUROPEAN PATENT SPECIFICATION

(45) Date of publication of patent specification: **11.09.85**

(51) Int. Cl.⁴: **C 05 C 1/02**

(21) Application number: **82200764.7**

(22) Date of filing: **19.06.82**

(54) Process for preparing thermally stable ammonium nitrate-containing granules.

(30) Priority: **19.06.81 NL 8102959**

(43) Date of publication of application:
**05.01.83 Bulletin 83/01**

(45) Publication of the grant of the patent:
**11.09.85 Bulletin 85/37**

(84) Designated Contracting States:
**AT BE DE FR GB IT NL SE**

(56) References cited:
**DE-B-1 012 313**
**FR-A-2 076 915**
**FR-A-2 451 351**
**GB-A-1 174 811**
**NL-A-6 709 519**
**US-A-3 379 496**

The file contains technical information
submitted after the application was filed and
not included in this specification

(73) Proprietor: **UNIE VAN KUNSTMESTFABRIEKEN B.V.**
**Maliebaan 81**
**NL-3581 CG Utrecht (NL)**

(72) Inventor: **Mutsers, Stanislaus Martinus Petrus**
**Eindstraat 9**
**NL-6166 EH Geleen (NL)**
Inventor: **Hoek, Cornelis**
**R.van Gelrestraat 38**
**NL-6118 AD Nieuwstadt (NL)**
Inventor: **Wagemans, Gerardus Mathias Cornelis**
**Dopheide 8**
**NL-6081 CC Haelen (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

## Description

The invention relates to a process for preparing thermally stable ammonium nitrate-containing granules of high bulk density, starting from a liquid composition containing a stabilization agent and ammonium nitrate.

A process of this kind is described in, for instance, US Patent Specification No. 3,379,496 according to which a virtually water-free ammonium nitrate melt containing a finely divided, insoluble, chemically inert clay as stabilization agent, is granulated through prilling. A disadvantage of this known process is that a prilling method entails considerable restriction as regards the granule size of the product. Production of granules with a diameter of more than 3 mm, for instance, requires very high prilling towers or extremely forced cooling of the falling drops. Since the demand for larger-size granules is increasing (especially for so-called bulk blends), and there also is a need for processes with a higher flexibility as regards to granule size of the product, a prilling process is less attractive therefore.

Another, more recent method for the preparation of ammonium nitrate granules, which enables a product with a larger granule size to be prepared, is the so-called fluid-bed granulation. In this process a liquid, ammonium nitrate-containing composition is sprayed onto or into a bed of seed particles which is fluidized by means of a gas flow, the seed particles growing as they are covered with coats of solidifying liquid phase, and the granules thus formed are discharged from the bed.

A process for the preparation of thermally stable ammonium nitrate-containing granules with a high bulk density by means of fluid-bed granulation is known from US Patent No. 4.316.736, which starts from an ammonium nitrate-containing solution, which includes a maximum of 20% by weight (in particular 5—10% wt.) water and 0.5—3% wt. magnesium nitrate, and according to which the temperature of the fluidized bed of seed particles is kept between 120 and 135°C. In order to obtain thermally stable granules in this process, it is necessary to cool the granules so slowly that in the range from 70 to 50°C they remain virtually homogeneous in temperature.

A disadvantage of this known process is that the finished product has a rather high water content (about 0.3% by wt.). In storage, granules with such a high water content show increased caking tendency and poorer hygroscopic behaviour, which in general makes it necessary to apply rather a large quantity of coating agent to them. Further, such product can hardly be stored or dispatched in bulk, and closed bags have to be used instead. Another disadvantage of this process is that the granules have to be cooled slowly in the temperature interval between 70 and 50°C, so that for a given quantity of product a relatively large cooling installation is required.

Moreover, this cooling method necessitates the use of several, in general three, discrete cooling stages (one for cooling down to 70°C, one for the 70→50°C range, and one for the range below 50°C).

Finally, this known process has the additional disadvantage that the flexibility of operation, for instance as regards the quantity of recycled material and thus also as regards the production capacity, is limited owing to the narrow temperature range mandatory for the bed of seed particles.

The invention now provides a process ruling out the abovementioned disadvantages completely or all but completely.

According to the invention this is achieved in that an ammonium nitrate-containing melt including at most 1,5% wt. water and 0.5—5% wt., relative to the quantity of ammonium nitrate, of a finely divided material which contains silica and is insoluble in and chemically inert relative to ammonium nitrate, is sprayed into or onto a fluidized bed of ammonium nitrate-containing seed particles having a temperature of between 95 and 120°C, and the granules formed are discharged from the bed. Said melt has a temperature at least 5°C above its crystallisation point and is sprayed by means of an air current having a temperature that is about equal to or slightly lower than that of the melt, with the air:melt mass ratio being between 1:1 and 1:4.

With the process according to the invention a granular product is obtained which, on the one hand, has high thermal stability and bulk density, and, on the other hand, has an extremely low moisture content (<0.1% wt., in particular ≤0,05% wt.) and excellent impact and crushing resistance, hardly cakes and is hardly hygroscopic. A particular advantage is that a product with a high bulk density (for instance, 940 g/l) is obtained over a very wide bed-temperature range. Consequently, a much higher degree of temperature-independence is achieved than with the known processes, which considerably enhances the flexibility of the process.

In contrast with the process described in US Patent No. 4.316.736, slow cooling in the temperature range between 70 and 50°C proves not to be required with the process according to the invention. It is therefore possible to use a rapid cooling technique, for instance fluid-bed cooling, which brings an economization in cooling equipment.

In the process according to the invention, preferably an ammonium nitrate-containing melt including less than 1.5% wt. water, in particular less than 0.5%, is used.

As silica-containing material several silica-containing clays can be used, for instance, preferably with a particle size of less than 10 μm, in particular less than 5 μm. Such products are described for instance in US Patent Specification No. 3,379,496. This material may be added to the ammonium nitrate-containing melt as well as to the solution before evaporation. Preferably, 1.5—2.5% wt. of silica-containing material relative to ammonium nitrate is used.

The temperature of the melt to be sprayed may vary. Preferably a temperature at least 5°C higher than the crystallization temperature of the melt is applied. The maximum temperature of the melt should in general be lower than the temperature at which the melt boils at atmospheric pressure. For safety reasons, melt temperatures higher than about 180°C are avoided. Thus, starting from a 98.5% melt, a temperature of between 158 and 180°C is used, and in the case of a 99.5% melt, a temperature of between 168 and 180°C.

The melt can be sprayed onto the bed of seed particles, for instance by means of a single-phase spray. By preference the melt is sprayed into the bed. This can be done in a known way with a powerful, hot gas current, for instance in a two-phase spray. The spraying gas (air) is given a temperature which is about equal to or somewhat lower than that of the melt to be sprayed. The quantity of spraying gas may vary. Such quantities of gas and melt are used that in the spraying device the mass ratio between the gas and the melt is about 1:1 to 1:4. By preference the melt is sprayed from the bottom upward into the bed.

The fluidization gas used is, in particular, air, passed through the bed from bottom to top. The quantity of fluidization gas is difficult to define exactly, but should at least be large enough, and be supplied at such a rate that all seed particles in the bed are kept in a fluidized state. The superficial velocity of the fluidization gas is preferably kept at twice the minimum fluidization velocity. By 'minimum fluidization velocity' is here understood the minimum velocity that suffices to support the weight of the seed particles in the bed. (In the case of ammonium nitrate with a mean particle size of 3 mm, this minimum fluidization velocity is about 1.2 m/sec). The velocity of the fluidization gas should of course be lower than that at which the individual seed particles are blown out of the bed.

The temperature of the fluidization gas may vary, for instance between 20 and 170°C. In general such a temperature is applied that, in combination with the temperature and the quantity of the seeds, the resulting bed temperature will have the desired value.

In principle, all silica-containing ammonium nitrate particles can be used as seeds. By preference, use is made of particles obtained in upgrading product from the fluidized bed. Such product is screened in a known manner, optionally after cooling, and the oversize granules are crushed; advantageously, the crushing-product is recycled together with the undersize granules as seed material to the fluidized bed. Depending on the required quantity of seed particles, only part of these granules may be recycled, if this is desirable, the remainder being added for instance, directly or after melting, to the liquid ammonium nitrate feed. If the quantity of granules available for recycling is too small, it is possible also to return part of the product granules, after crushing if desirable.

The quantity of material recycled may vary. It has been found that in the process according to the invention, a quantity which is equal to, or even smaller than, the quantity of melt fed in is sufficient. Preferably, such a quantity of material is recycled that the weight ratio between recycled material and melt is about 1:1 to 1:2. The size of the seed particles supplied to the bed may also vary. By preference, seed particles with a mean diameter of between 0.75 and 2.0 mm are used. The seeds fed in are fluidized in a known manner, for instance in a vessel with a perforated bottom. The height of the bed is in general between 0.5 and 1 m.

The temperature of the bed (95—120°C) is controlled in particular by means of the temperature of the seeds fed in (=recycle material) and of the fluidization gas.

The process according to the invention offers the particular advantage that at relatively low bed temperatures, for instance 100—110°C it is possible, depending on the water content of the ammonium nitrate feed to maintain said temperature by applying relatively cold fluidization gas and/or to cool either the granules discharged from the bed, prior to screening, or the material to be recycled. Also lower bed temperatures result in a reduction of the risk of caking and in an improved crushing behaviour of the oversize granules.

The granules obtained in the bed are by preference discharged continuously from the bed, for instance via the bottom or via an overflow.

Subsequently the granular product can be screened at once to obtain a fraction with the desired grain sizes and a larger and a smaller fraction, after which the product fraction is cooled down to the ambient temperature. It is also possible first to cool the granules discharged from the bed, for instance down to a temperature between the granulation and the ambient temperature, next to screen, and to further cool the product fraction obtained, if necessary.

The cooling of the granules can be effected by means of several cooling methods known in themselves. By preference, the cooling (of the granules prior to screening as well as of the product granules after screening) is effected in one or more fluid-bed coolers. As indicated earlier, this offer the advantage that relatively limited cooling equipment is sufficient. Moreover it has been found that rapid cooling of the granules in the process according to the invention results in product of increased bulk density, while—in contrast with the process according to US Patent No. 4.316.736—no deterioration of the thermal stability occurs.

By preference, conditioned air of ambient temperature or slightly higher temperature is used as fluidization gas in the fluid-bed cooler(s). The heated air leaving the cooler can advantageously be used as fluidization air for the bed of seeds. The air issuing from the fluidized bed of seeds contains, besides water vapour, a small quantity of ammonium nitrate-containing dust. The latter can be removed in a known way, for instance by washing with water or with a dilute ammonium nitrate-containing solution which is circulated.

The product granules resulting after screening and cooling can, if desired, be treated further with a coating agent in a known way. The moisture content of the product obtained is so low that a drying stage can be dispensed with. The granules may be subjected further, though—if desired, before the cooling—to a regular, rolling motion in a rotary drum, so as to effect an additional rise of the bulk density.

Although the present process has special importance for the preparation of ammonium nitrate granules, it can be used also for preparing granules which contain other components besides ammonium nitrate, for instance fillers, such as marlstone or dolomite, trace elements, agrochemicals (herbicides etc.), stabilizers other than clay, and other fertilizer salts. In particular it may be advantageous to include, besides clay, a small quantity of calcium nitrate in the ammonium nitrate-containing melt, as described in the non-prepublished Dutch Patent Application 8102.958 of the applicant. (=EP—A70581).

The invention will be further elucidated in the following examples.

Example 1

To a circular fluid-bed granulator (diameter 45 cm) with a perforated bottom, containing a bed of $NH_4NO_3$ seed particles (mean diameter 2.9 mm, bed height 40 cm) an ammonium nitrate melt was continuously supplied via a two-phase spray by means of a strong air current and sprayed laterally into the bed. The melt contained 1.5% wt, relative to $NH_4NO_3$, of a silica-containing clay, obtainable under the name of Sorbolite from Tennessee Mining and Chemical Corp. and containing mainly silica (73%) and alumina (14%) besides small quantities of $K_2O$, $CuO$, $TiO_2$, $Fe_2O_3$ and MgO. The bed (temperature 115°C) was fluidized by means of an upward air current supplied through the bottom plate. Via an overflow granules were continuously discharged to a screen and there separated into a fine fraction (particle size <2 mm), a product fraction (2—4 mm) and a coarse fraction (>4 mm). The coarse fraction was crushed on crusher rollers and continuously recycled to the bed together with the fine fraction.

The product fraction was rapidly cooled in a fluid-bed cooler to about 35°C. Part of this product was heated and cooled five times between 15 and 50°C.

The process conditions and the properties of the product obtained and of the product after five cycles are listed in the table below.

Example 2

In the same manner as described in Example 1, an $NH_4NO_3$ melt was granulated in a fluidized bed of seed particles. The process conditions and the properties of the product obtained are also listed in the table. In this example 2.0% wt. of stabilizer was used.

**0 068 573**

| Process conditions | Example 1 | Example 2 |
|---|---|---|
| Bed temp. (°C) | 115 | 105 |
| $H_2O$ content of melt (% wt.) | 0.53 | 0.60 |
| Melt temp. (°C) | 176 | 171 |
| Quantity of melt (kg/h) | 94 | 94 |
| Temp. of spraying air (°C) | 163 | 159 |
| Quantity of spraying air (kg/h) | 78 | 80 |
| Temp. of fluidization air (°C) | 119 | 109 |
| Quantity of fluidization air (kg/h) | 1180 | 1180 |
| Velocity of fluidization air (m/sec) | 2.51 | 2.44 |
| **Product quality** | | |
| Nitrogen content (% wt.) | 33.95 | 33.95 |
| $H_2O$ content (% wt.) | 0.07 | 0.09 |
| Bulk density (g/l) | 945 | 920 |
| Rolling capacity (% round) | 60 | 90 |
| Impact resistance (%) | 100 | 100 |
| Crushing strength (bar) | 61 | 60 |
| Oil-absorption capacity (% wt.) | 0.35 | 0.30 |
| $D_{50}$ (mm) | 2.65 | 2.15 |
| **Product after 5 cycles between 15 and 50°C** | | |
| Crushing strength (bar) | 35 | 40 |
| Oil absorption capacity (% wt.) | 1.20 | 1.30 |
| Volume increase (%) | 5 | 7 |

## Claims

1. Process for preparing thermally stable ammonium nitrate-containing granules of high bulk density, starting from a liquid composition containing ammonium nitrate and a stabilization agent, characterized in that an ammonium nitrate-containing melt including at most 1,5% wt. of water and 0,5—5% wt, relative to the quantity of ammonium nitrate, of a finely divided material which contains silica and is insoluble in and chemically inert relative to ammonium nitrate, which melt has a temperature at least 5°C above its crystallisation point, is sprayed into or onto a fluidized bed of ammonium nitrate-containing seed particles having a temperature of between 95 and 120°C, by means of an air current having a temperature that is about equal to or slightly lower than that of the melt, with the air:melt mass ratio being between 1:1 and 1:4, and the granules formed are discharged from the bed.

2. Process according to claim 1, characterized in that an ammonium nitrate-containing melt is used which contains 1.5—2.5% wt. of silica-containing material, relative to the quantity of ammonium nitrate.

3. Process according to one of the claims 1 or 2, characterized in that a silica-containing clay is used with a particle size of less than 10 µm.

4. Process according to any one of the claims 1—3, characterized in that the granules discharged from the bed are screened, and the product granules obtained after screening are cooled in one or more fluid-bed coolers.

5. Process according to claim 4, characterized in that the gas issuing from the cooler is at least in

5

part used as fluidization gas for the bed of seed particles.

6. Process according to one of the claims 1—5, characterized in that use is made of a melt containing clay and ammonium nitrate and further including one or more fillers, additives, agrochemicals and/or fertilizer components.

## Patentansprüche

1. Verfahren zur Herstellung von thermisch stabilen, Ammoniumnitrat enthaltenden Granulatkörnern mit hoher Schüttdichte, ausgehend von einer flüssigen Zusammensetzung, die Ammoniumnitrat und ein Stabilisierungsmittel enthält, dadurch gekennzeichnet, daß eine Ammoniumnitrat enthaltende Schmelze, enthaltend höchstens 1,5 Masse-% Wasser und 0,5—5 Masse-%, bezogen auf die Ammoniumnitratmenge, eines feinteiligen Materials, welches Siliciumdioxid enthält und unlöslich in und chemisch inert gegenüber Ammoniumnitrat ist, welche Schmelze eine Temperatur von mindestens 5°C über ihrem Kristallisationspunkt hat, in oder auf ein Wirbelbett von Ammoniumnitrat enthaltenden Keimteilchen mit einer Temperatur zwischen 95 und 120°C mittels eines Luftstromes, dessen Temperatur ungefähr gleich wie oder etwas niedriger ist als diejenige der Schmelze, wobei das Masseverhältnis von Luft:Schmelze zwischen 1:1 und 1:4 beträgt, versprüht wird und die gebildeten Granulatkörner aus dem Bett ausgetragen werden.

2. Verfahren nach Anspruch 1, dadurch gekennzeichnet, daß eine Ammoniumnitrat enthaltende Schmelze eingesetzt wird, die 1,5—2,5 Masse-% Siliciumdioxid enthaltendes Material, bezogen auf die Ammoniumnitratmenge, enthält.

3. Verfahren nach Anspruch 1 oder 2, dadurch gekennzeichnet, daß ein Siliciumdioxid enthaltender Ton mit einer Teilchengröße von weniger als 10 µm verwendet wird.

4. Verfahren nach einem der Ansprüche 1—3, dadurch gekennzeichnet, daß die aus dem Bett ausgetragenen Granulatkörner gesiebt werden und die nach dem Sieben erhaltenen Produktkörner in einem oder mehreren Wirbelbettkühlern gekühlt werden.

5. Verfahren nach Anspruch 4, dadurch gekennzeichnet, daß das aus dem Kühler austretende Gas zumindest zum Teil als Fluidisierungsgas für das Bett von Keimteilchen verwendet wird.

6. Verfahren nach einem der Ansprüche 1—5, dadurch gekennzeichnet, daß eine Schmelze eingesetzt wird, die Ton und Ammoniumnitrat enthält und weiters noch einen oder mehrere Füllstoffe, Additive, Agrarchemikalien und/oder Düngemittelkomponenten.

## Revendications

1. Procédé de préparation de granules thermiquement stables contenant du nitrate d'ammonium, de densité apparente élevée, à partir d'une composition liquide contenant du nitrate d'ammonium et un agent stabilisant, caractérisé en ce qu'on pulvérise une masse fondue contenant du nitrate d'ammonium comprenant au maximum 1,5% en poids d'eau et 0,5 à 5% en poids, par rapport à la quantité de nitrate d'ammonium, d'une matière finement divisée qui renferme de la silice et est insoluble et chimiquement inerte par rapport au nitrate d'ammonium, cette masse fondue ayant une température d'au moins 5°C au-dessus de son point de cristallisation, dans ou sur un lit fluidisé de particules d'ensemencement contenant du nitrate d'ammonium à une température de 95 à 120°C, à l'aide d'un courant d'air ayant une température à peu près égale ou légèrement inférieure à celle de la masse fondue, le rapport massique de l'air à la masse fondue étant compris entre 1:1 et 1:4 et on décharge du lit les granules formés.

2. Procédé selon la revendication 1, caractérisé en ce qu'on utilise une masse fondue contenant du nitrate d'ammonium qui contient 1,5 à 2,5% en poids d'une matière contenant de la silice par rapport à la quantité de nitrate d'ammonium.

3. Procédé selon la revendication 1 ou 2, caractérisé en ce qu'on utilise une argile contenant de la silice ayant une grosseur de particules inférieure à 10 microns.

4. Procédé selon l'une quelconque des revendications 1 à 3, caractérisé en ce qu'on tamise les granules déchargés du lit et on refroidit les granules de produit obtenus après tamisage dans un ou plusieurs refroidisseurs à lit fluide.

5. Procédé selon la revendication 4, caractérisé en ce qu'on utilise au moins partiellement le gaz qui sort du refroidisseur comme gaz de fluidization pour le lit des particules d'ensemencement.

6. Procédé selon l'une des revendications 1 à 5, caractérisé en ce qu'on utilise une masse fondue qui contient une argile et du nitrate d'ammonium et qui contient encore une ou plusieurs charges, additifs, agents agrochimiques et/ou composants d'engrais.